(19) Europäisches Patentamt
European Patent Office
Office européen des brevets

(11) Publication number: **0 173 380 A1**

# (12) EUROPEAN PATENT APPLICATION

(21) Application number: 85201241.8

(22) Date of filing: 26.07.85

(51) Int. Cl.⁴: **C 08 F 8/46**, C 08 F 287/00

(30) Priority: 31.08.84 US 646389
31.08.84 US 646391
03.10.84 US 657294

(43) Date of publication of application: 05.03.86
Bulletin 86/10

(84) Designated Contracting States: BE CH DE FR GB IT LI NL SE

(71) Applicant: SHELL INTERNATIONALE RESEARCH MAATSCHAPPIJ B.V., Carel van Bylandtlaan 30, NL-2596 HR Den Haag (NL)

(72) Inventor: Gelles, Richard, 2151 Kirkwood 266, Houston Texas 77077 (US)
Inventor: Gergen, William Peter, 11311 Hylander, Houston Texas 77070 (US)
Inventor: Lutz, Robert Gardiner, 8322 Twining Oaks, Spring Texas 77379 (US)
Inventor: Willis, Carl Lesley, 15922 Red Willow, Houston Texas 77084 (US)
Inventor: Martin, Michael Kent, 7333 Wyndham Way, Woodbury Minnesota 55125 (US)

(74) Representative: Aalbers, Onno et al, P.O. Box 302, NL-2501 CH The Hague (NL)

(54) **Modified block copolymers and processes for the preparation therefore.**

(57) Thermally stable, selectively hydrogenated monoalkenyl-aromatic hydrocarbon-conjugated diene block copolymers wherein at least one acid compound is grafted to the block copolymer at a secondary or tertiary carbon position and process for the preparation of such modified copolymers by

a) melt-mixing a block copolymer and an acid moiety, adding a free radical initiator and graft-reacting under free radical conditions, or

b) dissolving a block copolymer and an acid moiety in a suitable solvent, adding a free radical initiator and graft-reacting under free radical conditions.

EP 0 173 380 A1

# MODIFIED BLOCK COPOLYMERS AND PROCESSES FOR THE PREPARATION THEREFOR

This invention relates to novel selectively hydrogenated block copolymers and to two processes for preparing such copolymers.

It is known that a block copolymer can be obtained by an anionic copolymerization of a conjugated diene compound and an aromatic vinyl compound by using an organic alkali metal initiator. These types of block copolymers are diversified in characteristics, ranging from rubber-like characteristics to resin-like characteristics, depending on the content of the aromatic vinyl compound.

When the content of the aromatic vinyl compound is small, the produced block copolymer is a so-called thermoplastic rubber. It is a very useful polymer which shows rubber elasticity in the unvulcanized state and is appliable for various uses such as mouldings of shoe sole, etc.; impact modifier for polystyrene resins; adhesive; binder; etc.

The block copolymers with a high aromatic vinyl compound content, such as more than 70% by weight, provide a resin possessing both excellent impact resistance and transparency, and such a resin is widely used in the field of packaging. Many proposals have been made on processes for the preparation of these types of block copolymers, for example, as described in U.S. patent specification 3,639,517.

The elastomeric properties of certain aromatic vinyl polymers also appear to be due in part to their degree of branching. While the aromatic vinyl polymers have a basic straight carbon chain backbone, those with elastomeric

properties always have dependent alkyl radicals. For example, EPR (ethylene-propylene rubber) has a structure of dependent methyl radicals which appears to provide elasticity and other elastomeric properties. When an essentially unbranched straight chain polymer is formed, such as some polyethylenes, the resulting polymer is essentially non-elastomeric or in other words relatively rigid, and behaves like a typical thermoplastic without possessing rubber-like resilience or high elongation, tensile strength without break, low set or other properties characteristic of desirable elastomers.

Block copolymers have been produced, see U.S. Patent Specification Re 27,145 which comprise primarily those having a general structure

A—B—A

wherein the two terminal polymer blocks A comprise thermoplastic polymer blocks of vinylarenes such as polystyrene, while block B is a polymer block of a selectively hydrogenated conjugated diene. The proportion of the thermoplastic terminal blocks to the centre elastomeric polymer block and the relative molecular weights of each of these blocks is balanced to obtain a rubber having an optimum combination of properties such that it behaves as a vulcanized rubber without requiring the actual step of vulcanization. Moreover, these block copolymers can be designed not only with this important advantage but also so as to be handled in thermoplastic forming equipment and are soluble in a variety of relatively low cost solvents.

While these block copolymers have a number of outstanding technical advantages, one of their principal limitations lies in their sensitivity to oxidation. This was due to their unsaturated character which can be minimized by hydrogenating the copolymer, especially in the centre section comprising the polymeric diene block. Hydrogenation may be effected selectively as disclosed in U.S. patent specification Re 27,145. These polymers are hydrogenated block copolymers having a configuration, prior to hydrogenation, of A-B-A wherein each of the

A's is an alkenyl-substituted aromatic hydrocarbon polymer block and B is a butadiene polymer block wherein 35-55 mol per cent of the condensed butadiene units in the butadiene polymer block have 1,2-configuration.

These selectively hydrogenated ABA block copolymers are deficient in many applications in which adhesion is required due to its hydrocarbon nature. Examples include the toughening and compatibilization of polar polymers such as the engineering thermoplastics, the adhesion to high energy substrates of hydrogenated block copolymer elastomer based adhesives, sealants and coatings, and the use of hydrogenated elastomer in reinforced polymer systems. However, the placement onto the block copolymer of functional groups which can provide interactions not possible with hydrocarbon polymers solves the adhesion problem and extends the range of applicability of this material.

Beyond the very dramatic improvement in interface adhesion in polymer blends, a functionalized S-EB-S component can also contribute substantially to the external adhesion characteristics often needed in polymer systems. "EB" refers to "ethylene-butylene". These include adhesion to fibres and fillers which reinforce the polymer system; adhesion to substrates in adhesives, sealants, and coatings based on functionalized S-EB-S polymers, adhesion of decorations such as printing inks, paints, primers, and metals of systems based on S-EB-S polymers; participation in chemical reactions such as binding proteins such as heparin for blood compatibility; surfactants in polar-non-polar aqueous or non-aqueous dispersions.

Functionalized S-EB-S polymer can be described as basically commercially produced S-EB-S polymers which are produced by hydrogenation of S-B-S polymer to which is chemically attached to either the styrene or the ethylene-butylene block, chemically functional moieties.

Many attempts have been made for the purpose of improving adhesiveness, green strength and other properties by modifying block copolymers with acid compound having high functionality,

and various methods have been proposed for modifying synthetic conjugated diene rubbers with acid moieties.

U.S. patent specifications 4,292,414 and 4,308,353 describe a monovinylaryl/conjugated diene block copolymer with low 1,2-content grafted with a maleic acid compound. However, the process is limited to reaction conditions wherein the generation of free radicals is substantially inhibited by using free radical inhibitors or conventional stabilizers, for example, phenol type, phosphorous type or amine type stabilizers. The processes are limited to thermal addition reactions or the so-called "ENE" reaction. This reaction scheme depends on unsaturation in the base polymer for reaction sites. A reasonable amount of residual unsaturation must be present in order to obtain an advantageous degree of functionality or grafting onto the base polymer. A substantially completely hydrogenated base polymer would not react appreciably in this known process.

U.S. patent specification 4,427,828 describes a similar modified block copolymer with high 1,2-content, however, again produced by the "ENE" reaction.

The "ENE" process as described in the prior art results in a modified polymer product which is substituted at a position on the polymer backbone which is allylic to the double bond. The reaction can be shown for maleic anhydride as follows:

a) to main chain unsaturation

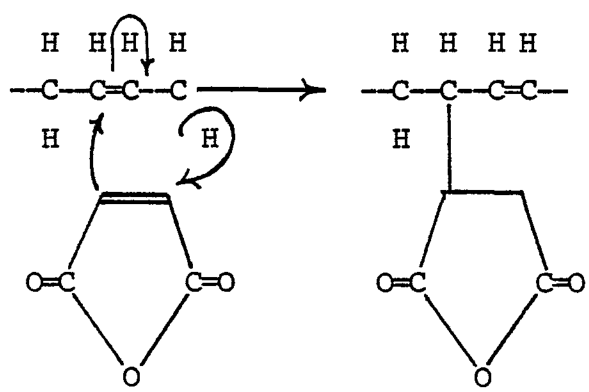

Allylic position

b) to vinyl unsaturation

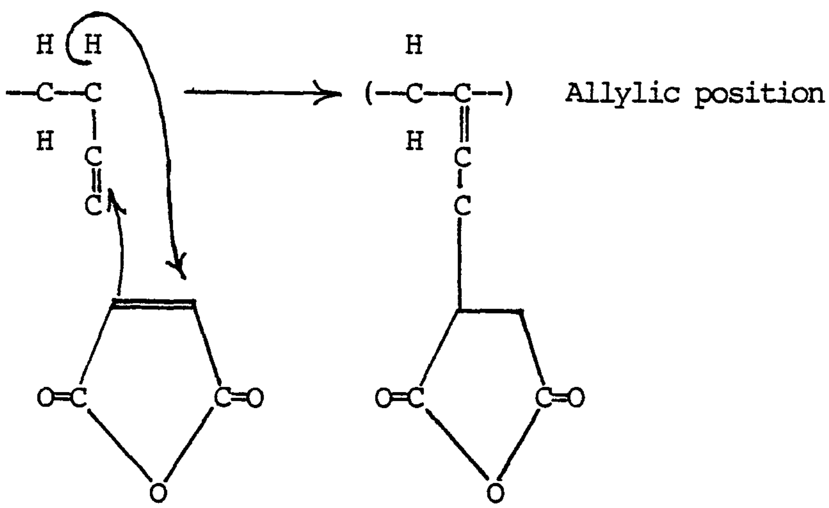

wherein a) represents addition across a double bond in the main chain of the base polymer and b) represents addition across a double bond occurring in a side chain. After addition and isomerization the substitution is positioned on a carbon allylic to the double bond.

The allylically substituted polymers are prone to thermal degradation due to their thermal instability. It is known in the art that allylic substituents can undergo what has been referred to as a contra-ENE reaction, see B.C. Trivedi, B.M. Culbertson, "Maleic Anhydride", (Plenum Press, New York, 1982) pages 172 and 173.

Further, because the ENE reaction requires a reasonable amount of unsaturation in the precursor base polymer, as discussed previously, the resulting functionalized copolymer product will have a significant amount of residual unsaturation and will be inherently unstable to oxidation.

Functionalized selectively hydrogenated thermoplastic block copolymers have now been found which are thermally stable, have a low residual unsaturation, are excellent in appearance and transparency, have excellent melt-flow characteristics, have excellent mechanical properties such as tensile strength and impact resistance and are particularly useful in blending with other polymers.

Accordingly, the present invention provides a functionalized selectively hydrogenated block copolymer comprising at least one block A and at least one block B, to which has been grafted an acid compound or a derivative thereof, wherein

(1) each A is predominantly a polymerized monoalkenylaromatic hydrocarbon block having an average molecular weight in the range from 2,000 to 115,000;

(2) each B prior to hydrogenation is predominantly a polymerized conjugated diene hydrocarbon block having an average molecular weight in the range from 20,000 to 450,000;

(3) the blocks A constitute 5-95 weight per cent of the copolymer;

(4) the unsaturation of the block B is reduced to less than 10% of the original unsaturation;

(5) the unsaturation of the A blocks is above 50% of the original unsaturation; and

(6) substantially all of the acid compounds or their derivatives are grafted to the block copolymer at secondary or tertiary carbon positions in the B blocks.

The modified block copolymers according to the present invention are substituted at a secondary or tertiary carbon position as shown in the exemplary reactions shown below:

c)

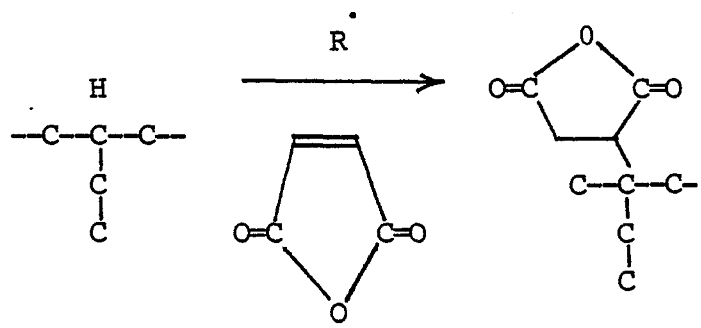


Tertiary Position

d) 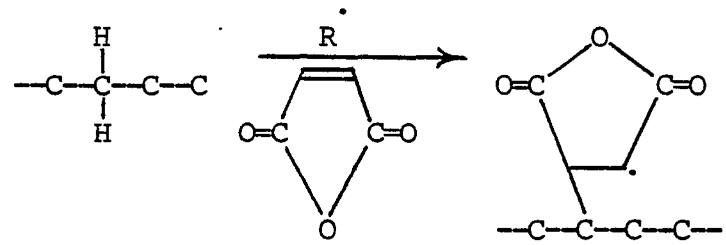


Secondary Position

The structure of the substituted block copolymer specifically determined by the location of the functionality on the polymer backbone at a secondary or tertiary position gives the block copolymer a substantially greater degree of thermal stability.

Block copolymers of conjugated dienes and vinylaromatic hydrocarbons which may be utilized include any of those which exhibit elastomeric properties and those which have 1,2-microstructure contents prior to hydrogenation of from about 7% to about 100%. Such block copolymers may be multiblock copolymers of varying structures containing various ratios of conjugated dienes to vinylaromatic hydrocarbons including those containing up to about 60 per cent by weight of vinylaromatic hydrocarbon. Thus, multiblock copolymers may be utilized which are linear or radial, symmetric or asymmetric and which have structures represented by the formulae A-B, A-B-A, A-B-A-B, B-A, B-A-B, B-A-B-A, $(AB)_{0,1,2...}BA$ and the like wherein A is a polymer block of a vinylaromatic hydrocarbon or a conjugated diene/-vinylaromatic hydrocarbon tapered copolymer block and B is a polymer block of a conjugated diene. The block copolymer preferably has the general formula $B_n(AB)_oA_p$ wherein n = 0 or 1, o = 0 or an integer of at least 1 and p = 0 or 1. Particularly preferred are block copolymers having at least one mid block B and at least two end blocks A. Diblock copolymers AB are also very suitable. Suitably, the blocks A comprise 5 to 35 per cent and preferably 5 to 30 percent by weight of the block copolymer.

The block copolymers may be produced by any well-known block polymerization or copolymerization procedures including

the well-known sequential addition of monomer techniques, incremental addition of monomer technique or coupling technique as illustrated in, for example, U.S. patent specifications 3,251,905; 3,390,207; 3,598,887 and 4,219,627. As is well known in the block copolymer art, tapered copolymer blocks can be incorporated in the multiblock copolymer by copolymerizing a mixture of conjugated diene and vinylaromatic hydrocarbon monomers utilizing the difference in their copolymerization reactivity rates. The tapered copolymer blocks contain predominantly one polymer, for example greater than 85%. Various patent specifications describe the preparation of multiblock copolymers containing tapered copolymer blocks including U.S. patent specifications 3,251,905; 3,265,765; 3,639,521 and 4,208,356.

Conjugated dienes which may be utilized to prepare the polymers and copolymers are those having from 4 to 8 carbon atoms per molecule and include 1,3-butadiene, 2-methyl-1,3-butadiene(isoprene), 2,3-dimethyl-1,3-butadiene, 1,3-pentadiene, 1,3-hexadiene, and the like. Mixtures of such conjugated dienes may also be used. The preferred conjugated diene is 1,3-butadiene.

Vinylaromatic hydrocarbons which may be utilized to prepare copolymers include styrene, o-methylstyrene, p-methylstyrene, p-tert-butylstyrene, 1,3-dimethylstyrene, alpha-methylstyrene, vinylnaphthalene, vinylanthracene and the like. The preferred vinylaromatic hydrocarbon is styrene.

According to a preferred embodiment of the present invention the block copolymer is a styrene-butadiene-styrene block copolymer. The polymerized styrene blocks preferably have an average molecular weight between 4,000 and 60,000 and the polymerized butadiene blocks preferably have an average molecular weight between 35,000 and 150,000. Suitably, in the range from 35 to 55 mol% and preferably 40 to 50 mol% of the condensed butadiene units in block B have a 1,2-configuration. Preferably, an average of less than 25% and more preferably less

than 10% of the blocks A are hydrogenated. The average unsaturation of the hydrogenated block copolymer has suitably been reduced to less than 20% of its original value.

It should be observed that the above-described polymers and copolymers may, if desired, be readily prepared by the methods set forth hereinbefore. However, since many of these polymers and copolymers are commercially available, it is usually preferred to employ the commercially available polymer as this serves to reduce the number of processing steps involved in the overall process. The hydrogenation of these polymers and copolymers may be carried out by a variety of well-established processes including hydrogenation in the presence of such catalysts as Raney Nickel, noble metals of Group 8 of the Periodic Table of the Elements, such as platinum and palladium, and soluble transition metal catalysts. Suitable hydrogenation processes which can be used are ones wherein the diene-containing polymer or copolymer is dissolved in an inert hydrocarbon diluent such as cyclohexane and hydrogenated by reaction with hydrogen in the presence of a soluble hydrogenation catalyst. Such processes are disclosed in U.S. Patent Specifications 3,113,986 and 4,226,952. The polymers and copolymers are hydrogenated in such a manner as to produce hydrogenated polymers and copolymers having a residual unsaturation content in the polydiene block of from about 0.5 to about 20 per cent, and preferably less than 5 per cent of their original unsaturation content prior to hydrogenation.

In general, any materials having the ability to react with the base polymer, in free radical initiated reactions are operable for the purposes of the invention.

These polymers can be functionalized by free radical initiated reactions in the melt.

In order to incorporate functional groups into the base polymer, monomers capable of reacting with the base polymer, for example, in solution or in the melt by free radical mechanism are necessary. Monomers may be polymerizable or non-polymerizable, however, preferred monomers are non-polymerizable or slowly polymerizing.

The monomers must be ethylenically unsaturated in order to take part in free radical reactions. We have found that by grafting unsaturated monomers which have a slow polymerization rate the resulting graft copolymers contain little or no homopolymer of the unsaturated monomer and contain only short grafted monomer chains which do not separate into separate domains.

The class of preferred monomers which will form graft polymers in the process of the present invention have one or more functional groups or their derivatives such as carboxylic acid groups and their salts, anhydrides, esters, imide groups, amide groups, acid chlorides and the like in addition to at least one point of unsaturation.

These functionalities can be subsequently reacted with other modifying materials to produce new functional groups. For example, a graft of an acid-containing monomer could be suitably modified by esterifying the resulting acid groups in the graft with appropriate reaction with hydroxy-containing compounds of varying carbon atoms lengths. The reaction could take place simultaneously with the grafting or in a subsequent post modification reaction.

The grafted polymer will usually contain from 0.02 to 20, preferably 0.1 to 10, and most preferably 0.2 to 5 weight per cent of grafted portion.

The block copolymers, as modified, can still be used for any purpose for which an unmodified material (base polymer) was formerly used. That is, they can be used for adhesives and sealants, or compounded and extruded and moulded in any convenient manner.

The preferred modifying monomers are unsaturated mono- and polycarboxylic-containing acids ($C_3$-$C_{10}$) with preferably at least one olefinic unsaturation, and anhydrides, salts, esters, ethers, amides, nitriles, thiols, thioacids, glycidyl, cyano,

hydroxy, glycol, and other substituted derivatives from said acids.

Examples of such acids, anhydrides and derivatives thereof include maleic acid, fumaric acid, itaconic acid, citraconic acid, acrylic acid, glycidyl acrylate, cyanoacrylates, hydroxy $C_1$-$C_{20}$ alkyl methacrylates, acrylic polyethers, acrylic anhydride, methacrylic acid, crotonic acid, ioscrotonic acid, mesaconic acid, angelic acid, maleic anhydride, itaconic anhydride, citraconic anhydride, acrylonitrile, methacrylonitrile, sodium acrylate, calcium acrylate and magnesium acrylate.

Other monomers which can be used either by themselves or in combination with one or more of the carboxylic acids or derivatives thereof include $C_2$-$C_{50}$ vinyl monomers such as acrylamide, acrylonitrile and monovinylaromatic compounds, i.e. styrene, chlorostyrenes, bromostyrenes, α-methylstyrene, vinylpyridines and the like.

Other monomers which can be used are $C_4$ to $C_{50}$ vinyl esters, vinyl ethers and allyl esters, such as vinyl butyrate, vinyl laurate, vinyl stearate, vinyl adipate and the like, and monomers having two or more vinyl groups, such as divinylbenzene, ethylene dimethacrylate, triallyl phosphite, dialkylcyanurate and triallyl cyanurate.

The preferred monomers to be grafted to the block copolymers according to the present invention are maleic anhydride, maleic acid, fumaric acid and their derivatives. It is well known in the art that these monomers do not polymerize easily. The acid compound may also be a sulphonic acid.

Of course, mixtures of monomer can be also added so as to achieve graft copolymers in which the graft chains have at least two different monomers therein (in addition to the base polymer monomers).

The invention further provides a process for preparing a novel functionalized selectively hydrogenated block copolymer as described hereinbefore, which process comprises melt-mixing a

block copolymer comprising at least one block A and at least one block B, A and B having the same meaning as described hereinbefore, and an acid moiety or its derivative, adding a free radical initiator and graft-reacting under free radical conditions.

The modified polymer product may be recovered in any suitable manner from the reaction product thus obtained.

Flow promoters such as oils, low molecular weight resins or other polymers can be included in the reaction mixture during the functionalization step.

Reaction temperatures and pressures should be sufficient to melt the reactants and also sufficient to thermally decompose the free radical initiator to form the free radical. Reaction temperatures would depend on the base polymer being used and the free radical initiator being used. Typical reaction conditions can be obtained by using a screw type extruder to mix and melt the reactants and to heat the reactant mixture to the desired reaction temperature. Useful temperatures may vary between wide limits, such as from +75 °C to 450 °C, preferably from 200 °C to 300 °C.

The invention also provides a process for preparing a functionalized selectively hydrogenated block copolymer as described hereinbefore, which process comprises dissolving a block copolymer comprising at least one block A and at least one block B, A and B having the same meaning as described hereinbefore, and an acid moiety or its derivative in a suitable solvent, adding a free radical initiator and graft-reacting under free radical conditions. The modified polymer product may be recovered in any suitable manner from the reaction product thus obtained.

The solvents which can be used in the latter process are inert liquid solvents such as hydrocarbons, e.g., aliphatic hydrocarbons, such as pentane, hexane, heptane, octane, 2-ethylhexane, nonane, decane, cyclohexane, methylcyclohexane or aromatic hydrocarbons, e.g., benzene, toluene, ethylbenzene, the

xylenes, diethylbenzenes, propylbenzenes. Mixtures of hydrocarbons, e.g., lubricating oil may also be used.

The temperature at which the latter process according to the present invention is carried out may vary between wide limits such as from 0 °C to 300 °C, preferably from 20 °C to 200 °C. The reaction may be carried out in an inert atmosphere such as nitrogen and may be carried out under pressure depending on the vapour pressure of the solvent used under reaction conditions. Reaction temperatures and pressures should be sufficient to thermally decompose the free radical initiator to form the free radical. Reaction temperatures would depend on the base polymer being used and the free radical initiator being used. Typical reaction conditions can be obtained by using, for example, an autoclave type reactor to heat the reactant mixture to the desired reaction temperature.

The grafting reaction is initiated by a free radical initiator which is preferably an organic peroxygen compound. Especially preferred peroxides are 2,5-dimethyl-2,5-di(t-butylperoxy)hexane, di-t-butyl peroxide, 2,5-dimethyl-2,5-di-tert-butylperoxy-3-hexyne (known under the trade mark Lupersol 130), α,α'-bis(tert-butylperoxy)diisopropylbenzene (known under the trade mark VulCup R), or any free radical initiator having a short half-life under the base polymer processing conditions. See pages 66-67 of "Modern Plastics", November 1971, for a larger list of such compounds.

The concentration of the initiator used to prepare the modified polymer may vary between wide limits and is determined by the desired degree of functionality and degradation allowable. Typical concentrations range from about 0.001 weight per cent to about 5.0 weight per cent, more preferably between 0.01 and 1.0 weight per cent.

The process of the invention is highly flexible and a great many modifications such as those proposed above are available to achieve any particular purpose desired.

Of course, any of the standard additives can be used with

these modified polymers. They include conventional heat stabilizers, slip-agents, antioxidants, antistatic agents, colorants, flame retardants, heat stabilizers, plasticizers, preservatives, processing aids and the like.

It is to be emphasized that in the definition of the base polymer, substituted polymers are also included; thus, the backbone of the polymer before functionalization can be substituted with functional groups such as chlorine, hydroxy, carboxy, nitrile, ester, amine and the like.

Furthermore, polymers which have been functionalized, particularly those with functional carboxylic acid groups, can be additionally cross-linked in a conventional manner or by using metallic salts to obtain ionomeric cross-linking.

The present invention will be further illustrated by the following examples.

Examples 1-4 and Comparative Experiment A

The base polymer used in the following examples was Kraton G-1652 Rubber, a trade mark for a commercial S-EB-S block copolymer (average molecular weight 7500-37500-7500). This polymer was melt reacted with maleic anhydride and Lupersol 101 in a 30 mm diameter corotating twin screw extruder. "Lupersol 101" is a trade mark for 2,5-dimethyl-2,5-di(t-butylperoxy)-hexane.

The reactants were premixed by tumbling in polyethylene bags and then fed into the extruder. For the experiments, all extrusion conditions except for reactant concentrations were kept constant. The following two-stage screw configuration was used: the first stage comprised a 6 mm spacer, a 75 mm feed section, eight mixing cams, and an orifice ring pair. The second stage was identical except for a feed section 45 mm long. The melt temperature was kept at 150 °C in the feed zone and increased to 260 °C by the time material reached the die. The extruder was starve fed with the first orifice ring pair left open. In the second stage, flow was restricted with the second orifice ring pair. A screw speed of 350 rpm was used, leading to

an output of 4.5 kg per hour.

The samples prepared in the manner described hereinbefore were first analysed for base polymer degradation by measuring gel content as determined by hot tetrahydrofuran (THF) insolubles. This was accomplished by extraction with refluxing tetrahydrofuran. The soluble fraction of the sample was then recovered by precipitation of the extractant into isopropyl alcohol. This precipitation separated the unbound maleic anhydride from the base polymer. The precipitated polymer was then dried at sub-atmospheric pressure to convert all functional groups to the anhydride form, as verified by infrared measurements. The maleic anhydride graft content of the soluble fraction of the samples was then measured by titration with potassium methoxide.

Table 1 shows the various reactant concentrations examined, as well as analytical results for the materials prepared.

Table 1

Maleic Anhydride Extruder Grafted Block Copolymer

| Comparative Experiment | Example | %wt Maleic Anhydride Added | %wt Lupersol 101 Added | %wt Maleic Anhydride Grafted Onto THF Solubles | %wt THF Insolubles |
|---|---|---|---|---|---|
| A | | 3 | 0 | 0 | 0 |
| | 1 | 3 | 0.01 | 0.2 | 8 |
| | 2 | 3 | 0.1 | 1.8 | 2 |
| | 3 | 5 | 0.5 | 4.6 | 2 |
| | 4 | 3 | 1.0 | 2.2 | 40 |

In Comparative Experiment A maleic anhydride could not be grafted to the base polymer within the limits of detection of the analytical technique used without addition of a free-radical initiator. In Examples 1-3 a wide range of functionality levels were obtained by the free radical initiated melt grafting technique. In Example 4 severe base polymer degradation has taken place when too high a level of free radical initiator is used.

Example 5

Extruder grafting conditions used were the same as for the above examples.

100 parts of a 70/30 weight per cent mixture of anionically polymerized ethylene-butylene copolymer (140,000 molecular weight) and anionically polymerized homopolystyrene (50,000 molecular weight) were tumbled (dry blended) with 3 parts of maleic anhydride and 0.1 parts of Lupersol 101. This mixture was extruded under the previous grafting conditions.

A 10 gram sample of the extruded composition was dissolved in 200 ml chloroform and the solution was then added to 1200 ml of acetone to precipitate the EB copolymer component which was then recovered by filtrations and washing in acetone.

A sample of this EB copolymer component was then analysed by infrared spectroscopy. The IR spectrum showed characteristic acid anhydride bands at between about $1700^{-cm}$ and $1800^{-cm}$ showing the presence of maleic anhydride bound to the EB copolymer component.

The polystyrene-chloroform-acetone mixture from the previous step was held at sub-atmospheric pressure at 90 °C in a Roto Vap for 30 minutes to remove unbound (free) maleic anhydride and to concentrate the solution in preparation for casting an IR film sample. The sample was analysed and showed essentially no presence of maleic anhydride. This result showed that there was no maleic anhydride bound to the styrene component.

From the above experiments it can be concluded that the maleic anhydride is grafted to the EB (mid-block) component in the block copolymer.

Example 6

Two S-EB-S block copolymers similar to Kraton G-1652 were prepared having residual unsaturations of 0.170 and 0.098 milliequivalents of double bonds per gram. These copolymers were extruder grafted using the same extruder conditions as in the previous examples. Again 3.0 weight per cent maleic anhydride and 0.1 weight per cent of Lupersol 101 were used. Both extruded materials were analysed as above for bound maleic anhydride by titration with potassium methoxide.

It was found that both samples contained 1.6 weight per cent of maleic anhydride. Therefore, it can be concluded that the degree of residual unsaturation does not affect the graft reaction.

Example 5 shows that grafting had occurred in the EB block. The EB block contains five possible classes of carbon atoms where grafting can occur: 1°, 2°, 3°, allylic and vinyl carbons. Allylic and vinyl carbons are associated with unsaturation. Example 6 showed that the level of residual unsaturation does not affect the graft reaction. Therefore, it can be concluded that grafting is not occurring at these carbons.

It is well known that the reactivity of the 1°, 2°, 3° carbons is related to the ease of formation of free radicals resulting from hydrogen abstraction and follows the relationship 3°>2°>1°. 1° carbons are not kinetically favoured and occur infrequently. Since the 3° carbon is most favoured kinetically to react and since the 2° carbons occur more frequently, substantially all of the grafting should occur at the 2° and 3° carbons.

Examples 7-13

The base polymer used in the following examples was Kraton G-1652 Rubber, a trade mark for a commercial S-EB-S block copolymer (average molecular weight 7500-37500-7500). This polymer was dissolved in 1200 grams of cyclohexane after which maleic anhydride was added and then Lupersol 101 or Lucidol 98 initiator. "Lupersol 101" is a trade mark for 2,5-dimethyl-2,5-di(t-butylperoxy)hexane and "Lucidol 98" is a trade mark for benzoyl peroxide. Benzoyl peroxide was used in all Examples except Example 11 which used Lupersol 101.

The reactants were added to a glass reactor which was then heated to the boiling point of the solvent (cyclohexane) and the contents refluxed. Upon completion of the reaction, when peroxide was consumed, the reactor was cooled and the polymer precipitated by coagulation with isopropyl alcohol. Potentiometric titration analysis was used to determine the maleic anhydride content of the polymer. The results are presented in Table 2.

Table 2

| Example | Base Polymer g | Maleic Anhydride g | Initiator g | Reaction Time | %wt Maleic Anhydride |
|---|---|---|---|---|---|
| 7 | 120 | 1.2 | 6.0 | 17 h | 0.44 |
| 8 | 120 | 3.6 | 6.0 | 1 h 11 min | 1.25 |
| 9 | 120 | 3.6 | 3.0 | 2 h 15 min | 1.22 |
| 10 | 120 | 1.2 | 6.0 | 2 h | 0.77 |
| 11 | 120 | 1.2 | 30.5 ml of 75% solution | 1 h 27 min | 0.42 |
| 12 | 120 | 7.23 | 6.0 | 42 min | 0.36 |
| 13 | 120 | 14.42 | 6.0 | 23 min | 0.25 |

# CLAIMS

1. A functionalized selectively hydrogenated block copolymer comprising at least one block A and at least one block B, to which has been grafted an acid compound or its derivative, wherein

(1) each A is predominantly a polymerized monoalkenylaromatic hydrocarbon block having an average molecular weight in the range from 2,000 to 115,000;

(2) each B prior to hydrogenation is predominantly a polymerized conjugated diene hydrocarbon block having an average molecular weight in the range from 20,000 to 450,000;

(3) the blocks A constitute 5-95 weight per cent of the copolymer;

(4) the unsaturation of the block B is reduced to less than 10% of the original unsaturation;

(5) the unsaturation of the A blocks is above 50% of the original unsaturation; and

(6) substantially all of the acid compounds or their derivatives are grafted to the block copolymer at secondary or tertiary carbon positions in the B blocks.

2. A functionalized selectively hydrogenated block copolymer as claimed in claim 1, which has the general formula $B_n(AB)_oA_p$ wherein n = 0 or 1, o = 0 or an integer of at least 1 and p = 0 or 1.

3. A functionalized selectively hydrogenated block copolymer as claimed in claim 1 or 2, which has at least one mid block B and at least two end blocks A.

4. A functionalized selectively hydrogenated block copolymer as claimed in any one of the preceding claims, wherein the blocks A comprise 5 to 35 per cent by weight of the block copolymer.

5. A functionalized selectively hydrogenated block copolymer as claimed in any one of the preceding claims, wherein an average of less than 10% of the blocks A have been hydrogenated.

6. A functionalized selectively hydrogenated block copolymer as claimed in any one of the preceding claims, wherein the unsaturation of block B has been reduced to less than 5% of its original value.

7. A functionalized selectively hydrogenated block copolymer as claimed in any one of the preceding claims, wherein the average unsaturation of the hydrogenated block copolymer has been reduced to less than 20% of its original value.

8. A functionalized selectively hydrogenated block copolymer as claimed in any one of the preceding claims, wherein the block copolymer is a styrene-butadiene-styrene block copolymer.

9. A functionalized selectively hydrogenated block copolymer as claimed in claim 8, wherein the polymerized styrene blocks have an average molecular weight between 4,000 and 60,000.

10. A functionalized selectively hydrogenated block copolymer as claimed in claim 8 or 9, wherein the polymerized butadiene blocks have an average molecular weight between 35,000 and 150,000.

11. A functionalized selectively hydrogenated block copolymer as claimed in any one of claims 8 to 10, wherein in the range of from 35% to 55% of the condensed butadiene units have 1,2-configuration.

12. A functionalized selectively hydrogenated block copolymer as claimed in any one of the preceding claims, wherein the acid compound is an unsaturated carboxylic acid.

13. A functionalized selectively hydrogenated block copolymer as claimed in claim 12, wherein the acid compound is maleic acid or a derivative thereof.

14. A functionalized selectively hydrogenated block copolymer as claimed in any one of claims 1 to 11, wherein the acid compound is a sulphonic acid.

15. A functionalized selectively hydrogenated block copolymer as claimed in any one of the preceding claims, wherein the grafted acid compound or a derivative thereof is present in an amount between 0.02 and 20 per cent by weight.

16. A functionalized selectively hydrogenated block copolymer as claimed in claim 15, wherein the grafted acid compound or a derivative thereof is present in an amount between 0.1 and 10 per cent by weight.

17. A functionalized selectively hydrogenated block copolymer as claimed in claim 16, wherein the grafted acid compound or a derivative thereof is present in an amount between 0.2 and 5 per cent by weight.

18. A process for preparing a functionalized selectively hydrogenated block copolymer as claimed in any one of the preceding claims, which process comprises melt-mixing a block copolymer comprising at least one block A and at least one block B, A and B having the same meaning as in claim 1, and an acid moiety or its derivative, adding a free radical initiator and graft-reacting under free radical conditions.

19. A process as claimed in claim 18, wherein a flow promoter is added.

20. A process as claimed in claim 19, wherein the flow promoter is an oil.

21. A process as claimed in claim 19, wherein the flow promoter is a low molecular weight resin.

22. A process for preparing a functionalized selectively hydrogenated block copolymer as claimed in any one of claims 1 to 18, which process comprises dissolving a block copolymer comprising at least one block A and at least one block B, A and B having the same meaning as in claim 1, and an acid moiety or a derivative thereof in a suitable solvent, adding a free radical initiator and graft-reacting under free radical conditions.

23. A process as claimed in claim 22, wherein the solvent is an inert hydrocarbon liquid solvent.

24. A process as claimed in claim 23, wherein the solvent is selected from the group consisting of pentane, hexane, heptane,

octane, 2-ethylhexane, nonane, decane, cyclohexane, methylcyclohexane, benzene, toluene, ethylbenzene, xylene, diethylbenzene and propylbenzene.

25. A process as claimed in 24, wherein the reaction is carried out at a temperature between 0 °C and 300 °C.

26. A process as claimed in claim 25, wherein the reaction is carried out at a temperature between 20 °C and 200 °C.

27. A process as claimed in any one of claims 18 to 26, wherein the acid moiety or a derivative thereof is derived from a carboxylic acid or a derivative thereof.

28. A process as claimed in claim 27, wherein the acid moiety or a derivative thereof is derived from a dicarboxylic acid or a derivative thereof.

29. A process as claimed in any one of claims 18 to 26, wherein the acid moiety or a derivative thereof is derived from a sulphonic acid or a derivative thereof.

30. A process as claimed in any one of claims 18 to 29, wherein the initiator is an organo peroxygen compound.

31. A process as claimed in claim 30, wherein the initiator is selected from the group consisting of 2,5-dimethyl-2,5-di(t-butylperoxy)hexane, di-t-butyl peroxide, 2,5-dimethyl-2,5-di-tert-butylperoxy-3-hexyne, α,α'-bis(tert-butylperoxy)diisopropylbenzene.

European Patent Office

# EUROPEAN SEARCH REPORT

0173380
Application number

EP 85 20 1241

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| | | | C 08 F 8/46<br>C 08 F 287/00 |
| A | DE-A-1 945 835 (SHELL)<br>* Claims 1-12 *<br>--- | 1 | |
| A | EP-A-0 103 148 (FIRESTONE)<br>* Claims 1,4,5,9-11,13-15,19-21; page 11, line 34 - page 12, line 37 *<br>--- | 1 | |
| A | US-A-4 033 888 (T.E. KIDVSKY)<br>* Claim 1; column 3, line 52 - column 4, line 23 *<br>--- | 1 | |
| A | GB-A-1 032 150 (SHELL)<br>* Claim 1 *<br>----- | 1 | |
| | | | TECHNICAL FIELDS SEARCHED (Int. Cl.4) |
| | | | C 08 F |

The present search report has been drawn up for all claims

| Place of search | Date of completion of the search | Examiner |
|---|---|---|
| THE HAGUE | 15-10-1985 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document